# EUROPEAN PATENT APPLICATION

(11) **EP 2 028 612 A1**
(43) Date of publication of application: **25.02.2009**
(21) Application number: 07743716.8
(22) Date of filing: 18.05.2007
(51) Int. Cl.: G06Q 10/00

(54) **MOBILE TERMINAL DEVICE AND SCHEDULE MANAGING METHOD**

(30) Priority: 09.06.2006 JP 2006161172
(71) Applicant: NEC Corporation, Minato-ku Tokyo 108-8001 (JP)
(72) Inventor: SAGAWA, Rumi, Kodama-gun, Saitama 367-0297 (JP)
(74) Representative: Glawe, Delfs, Moll
(86) International application number: PCT/JP2007/060281
(87) International publication number: WO 2007/142011

(57) **Abstract**

The present invention is to provide a mobile terminal device and a schedule management method, both of which can confirm a schedule easily and execute a process concerning the schedule easily. Among pre-registered schedules, a schedule within a certain period of time is sequentially displayed in a telop, the operation of the telop is stopped by operating a particular key during displaying of the telop, and a detailed screen is displayed with respect to a selected schedule. Furthermore, a member registered in the schedule is stored in advance in association with phonebook data; in the case where a member is selected on the detailed screen, a mail address and a phone number corresponding to the member are specified; and a mail transmission screen on which a mail address is previously displayed and a phone calling screen on which a phone number is previously displayed are displayed. Furthermore, when a predetermined time is elapsed from a time registered in the schedule, the mail address corresponding to the registered member is specified, and a standard text mail previously set to the member is transmitted.

## Description

### TECHNICAL FIELD

The present invention relates to a mobile terminal device and a control method for the same and, more particularly, relates to a mobile terminal device provided with a schedule function and a schedule management method in an aforementioned mobile phone.

### BACKGROUND ART

In recent years, users who use a schedule function incorporated in mobile terminal devices such as mobile phones have increased, and the number of cases of registered schedules has also increased. This shows that one of backgrounds is that situations which set schedules by mail have increased accompanying with the spread of mail functions of mobile terminal devices.

With regard to such a schedule function, for example, the following Patent Document 1 discloses a technique which solves vexatiousness in user's schedule registration by providing a mail analysis processing unit which analyzes whether or not a received mail is a mail in a pre-determined schedule form and a schedule management processing unit which collates a schedule described in the mail in the pre-determined schedule form with an already registered schedule and registers the schedule in a schedule registration unit, and by achieving an auto-link between the mail and the schedule.
Patent Document 1: Japanese Patent Application Laid-Open (JP-A) No. 2003-58514 (pp. 3 to 6, and FIG. 1)

### DISCLOSURE OF THE INVENTION

### PROBLEMS TO BE SOLOVED BY THE INVENTION

However, in the case where a schedule is confirmed in detail in the technique disclosed in Patent Document 1, first, a list of registered schedules has to be displayed, and the schedule to be confirmed in detail has to be selected from there; and therefore, there is a problem in that the schedule cannot be easily confirmed in the case where the number of cases of the registered schedules is many and in the case of confirming contents urgently.

Furthermore, also in the case of contacting urgently, for example, in the case where there are cancel, tardy, and the like with respect to a planned schedule, since the contents of the schedules and phonebook data are not linked, a user has to perform a mail transmission operation (input of mail address, title, and body text) and a phone calling operation after the user confirms the phonebook data. Therefore, a process concerning the schedules cannot be executed easily.

The present invention has been made in view of the aforementioned problems, and a main exemplary object of the present invention is to provide a mobile terminal device and a schedule management method, both of which can confirm a schedule easily and execute a process concerning the schedule easily.

### MEANS FOR SOLVING PROBLEM

To achieve the aforementioned exemplary object, a mobile terminal device according to an exemplary aspect of the invention provided with a schedule function which registers a user's schedule in a storing unit includes at least a control unit which displays at least a part of information in a telop on a display unit, the information being concerned with one or a plurality of schedules to be executed within a predetermined period among schedules previously registered in the storing unit.

In the present invention, it may be configured that the control unit displays specific information to be selected from among the information concerning the schedule on the display unit as an icon corresponded to the specific information.

Furthermore, in the present invention, it may be configured that in the case where a particular key is operated during displaying of the telop, the control unit stops the operation of the telop display; and in the case where a predetermined schedule is selected from among schedules displayed in the telop whose operation is stopped, the control unit displays a schedule detail screen, on which all information concerning the predetermined schedule is described, on the display unit.

Furthermore, in the present invention, it may be configured that the storing unit previously stores members to be registered in the schedule in association with phonebook data; and in the case where a predetermined member is selected on the schedule detail screen, it may be configured that the control unit fetches a mail address corresponding to the predetermined member from the phonebook data, and displays a mail transmission screen, on which the mail address is previously displayed, on the display unit; or it may be configured that the control unit fetches a phone number corresponding to the predetermined member from the phonebook data, and displays a phone calling screen, on which the phone number is previously displayed, on the display unit.

Furthermore, in the present invention, it may be configured that the storing unit previously stores with members to be registered in the schedule in association with phonebook data; and when a pre-set time is elapsed from a time registered in a predetermined schedule, the control unit fetches a mail address corresponding to a member registered in the predetermined schedule from the phonebook data, and transmits a standard text mail previously set in the mail address.

Furthermore, a schedule management method according to an exemplary aspect of the invention in a mobile terminal device provided with a schedule function which registers a user's schedule in a storing unit includes at least: a first step of selecting one or a plurality of schedules to be executed within a predetermined period among schedules previously registered in the storing unit; and a second step of displaying at least a part of information concerning one or the plurality of the schedules in a telop on a display unit.

In the present invention, it may be configured that in the second step, the display unit is displayed with specific information to be selected from among the information concerning the schedule as an icon corresponded to the specific information.

Furthermore, in the present invention, it may be configured to further include a third step of stopping the operation of a telop display in the case where a particular key is operated during displaying of the telop; and a fourth step of displaying a schedule detail screen, on which all information concerning a predetermined schedule is described, on the display unit in the case where the predetermined schedule is selected from among the schedules displayed in a telop whose operation is stopped.

Furthermore, in the present invention, the storing unit may be configured to previously store members to be registered in the schedule in association with phonebook data; and in the case where a predetermined member is selected on the schedule detail screen displayed at the fourth step, it may be configured that a mail address corresponding to the predetermined member is fetched from the phonebook data, and a mail transmission screen, on which the mail address is previously displayed, is displayed on the display unit; or it may be configured that a phone number corresponding to the predetermined member is fetched from the phonebook data, and a phone calling screen, on which the phone number is previously displayed, is displayed on the display unit.

Furthermore, in the present invention, the storing unit may be configured to previously store members to be registered in the schedule in association with phonebook data, and when a pre-set time is elapsed from a time registered in a predetermined schedule, a mail address corresponding to a member registered in the predetermined schedule is fetched from the phonebook data, and a standard text mail previously set in the mail address is transmitted.

As described above, in the mobile terminal device of the present invention, the schedule is not merely displayed; but, detailed information of the schedule (locations, members, and the like) is displayed by displaying the schedule in a telop and by pressing a particular key during displaying of the telop; and therefore, the schedule can be confirmed easily.

Furthermore, the member registered in the schedule is stored in advance in association with the existing phonebook data, the phone calling screen and the mail transmission screen to the member are displayed when the member is selected, and the standard text mail previously set to the registered member is automatically transmitted when it becomes a time previously set in the schedule; and therefore, a process concerning the schedule such as contact to the member can be easily executed without inputting and selecting the phone number and the mail address.

### EFFECT OF THE INVENTION

According to the mobile terminal device and the schedule management method of the present invention, the following effects can be achieved.

A first effect of the present invention is that a schedule can be confirmed by a simple operation. The reason is that the control unit of the mobile terminal device of the present invention controls so that at least a part of information concerning the schedule within a predetermined period among pre-registered schedules is sequentially displayed in a telop, the operation of the telop is stopped for the operation of a particular key during displaying of the telop, and the detailed screen is displayed with respect to the selected schedule.

Furthermore, a second effect of the present invention is that a process concerning the schedule can be easily executed. The reason is that members registered in the schedule are stored in the storing unit in advance in association with existing phonebook data; the control unit controls to display the phone calling screen and the mail transmission screen to the member when the member is selected on the detail screen of the schedule, and to automatically transmit a standard text mail previously set to the registered member when it becomes a time previously set in the schedule; and therefore, contact or the like to the member can be easily executed.

### BEST MODE FOR CARRYING OUT THE INVENTION

As shown in the related art, a schedule function of a mobile terminal device is widely used; however, in the conventional schedule function, a list of registered schedules has to be displayed, and the schedule to be confirmed in detail has to be selected from there; and therefore, the schedule cannot be easily confirmed. Furthermore, since contents of the schedule and phonebook data are not linked, a process related to the schedule cannot be easily executed.

Furthermore, in the case of confirming the aforementioned schedule, for example, the detail of the schedule can be always displayed on a screen; however, there occur problems in that the schedule is apt to be overlooked because the schedule is unnoticeable in this method, it is difficult to display other information because the screen is occupied by the schedule, and the screen looks unattractive. More particularly, the aforementioned problems are dominantly appeared in equipment whose display screen is small, for example, a mobile terminal device such as a mobile phone.

Consequently, the present invention does not merely display the schedule; but, at least a part of information concerning the schedule within a certain period of time among pre-registered schedules is sequentially displayed in a telop, the operation of the telop is stopped for the operation of a particular key during displaying of the telop, and a detailed screen is displayed with respect to a selected schedule. For this, contents of the schedule can be confirmed easily while effectively displaying the schedule. Furthermore, in the case where a member registered in the schedule is stored in advance in association with existing phonebook data and the member is selected by the detailed screen, a mail address and a phone number corresponding to the member are specified, and a mail transmission screen on which the mail address is previously displayed and a phone calling screen on which the phone number is previously displayed are displayed; and in addition, when it becomes a time previously set in the schedule, a standard text mail previously set with respect to the registered member is automatically transmitted. For this, mail transmission and phone calling to the member can be performed rapidly in the case where there occurs a change in the schedule, and a process concerning the schedule can be easily executed.

### Exemplary Embodiment 1

In order to describe the aforementioned exemplary embodiment of the present invention in further detail, a mobile terminal device and a schedule management method according to a first exemplary embodiment of the present invention will be described with reference to FIG. 1 to FIG. 7. FIG. 1 is a block diagram typically showing a configuration of the mobile terminal device of the exemplary embodiment. Furthermore, FIG. 2 is a flow chart diagram showing a procedure of registration and a telop display of the schedule; and FIG. 3 is a flow chart diagram showing a procedure of a detailed display of the schedule. Furthermore, FIG. 4 is a view showing a configuration example of a schedule registration screen; and FIG. 5 is a view showing transition from a telop display screen to a detailed screen of the schedule. Furthermore, FIG. 6 is a flow chart diagram showing a procedure of mail transmission or phone calling; and FIG. 7 is a view showing transition from the detail screen of the schedule to mail transmission and phone calling screens.

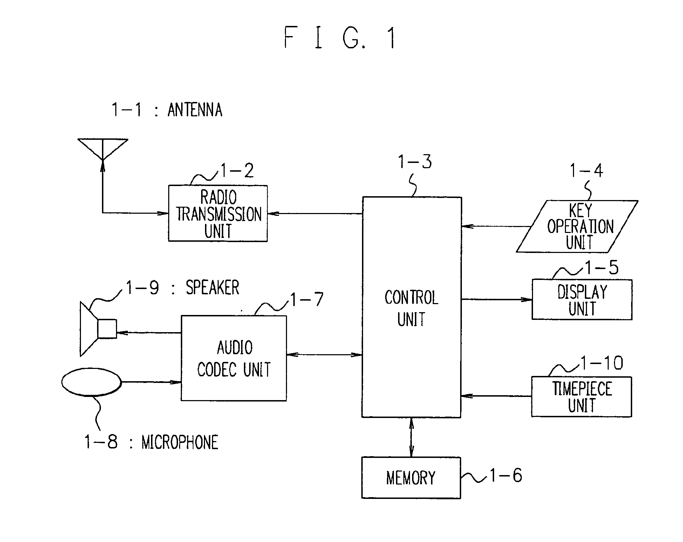

As shown in FIG. 1, the mobile terminal device of the exemplary embodiment includes an antenna 1-1; a radio transmission unit 1-2; a control unit 1-3 made up of a central processing unit (CPU) or the like; a key operation unit 1-4 composed of direction keys, numeric keys, particular keys, and the like; a display unit 1-5 made up of a liquid crystal display, an organic electroluminescence (EL) display, or the like; a memory 1-6 made up of a random access memory (RAM) or the like; an audio codec unit 1-7; a microphone 1-8; a speaker 1-9; a timepiece unit 1-10; and the like.

The mobile terminal device communicates with a base station by control of the control unit 1-3 via the radio transmission unit 1-2, and the antenna 1-1. The radio transmission unit 1-2 receives a signal via the antenna 1-1; selects a signal frequency and performs frequency conversion; and amplifies and demodulates the same to output received data to the control unit 1-3. The control unit 1-3 processes the received data to output an audio signal to the audio codec unit 1-7. The audio codec unit 1-7 converts the audio signal to an analog signal, and the speaker 1-9 outputs sound.

Furthermore, the sound inputted by the microphone 1-8 is A/D converted to a pulse code modulation (PCM) signal by the audio codec unit 1-7; the control unit 1-3 processes the signal to transmission data; and the radio transmission unit 1-2 modulates the transmission data and amplifies the same as a carrier wave of a specified frequency to transmit via the antenna 1-1.

Furthermore, the control unit 1-3 writes and reads information to and from the memory 1-6, performs display control of the display unit 1-5, and performs an operation detection process of the key operation unit 1-4.

More specifically, when a user registers information concerning the schedule (hereinafter, referred to as schedule data) using the key operation unit 1-4, registered schedule data is written to the memory 1-6 by the control unit 1-3.

Furthermore, the control unit 1-3 compares present date and time information timed by the timepiece unit 1-10 with date and time information in the schedule data, reads predetermined schedule data (for example, schedule data within 24 hours) from the memory 1-6, and displays in a telop on the display unit 1-5. The telop display is a technique which displays information so as to flow in a certain direction, and the telop display can be achieved by staggering a position at a certain time interval.

In addition, FIG. 1 is a basic configuration of the mobile terminal device of the exemplary embodiment, there may be also included means which is for achieving other functions such as a digital camera function, a TV phone function, a TV broadcast reception function, a non-contact IC card function, and the like. Furthermore, a plurality of the display units 1-5 may be included. In this case, the telop display may be executed on any one of the display units; the telop display may be executed on the plurality of the display units; and the telop display and the detailed display of the schedule may be executed at different display units, for example, the schedule is displayed in the telop on a small display unit on the backside, and the detailed display of the schedule is displayed on the large display unit on the inside.

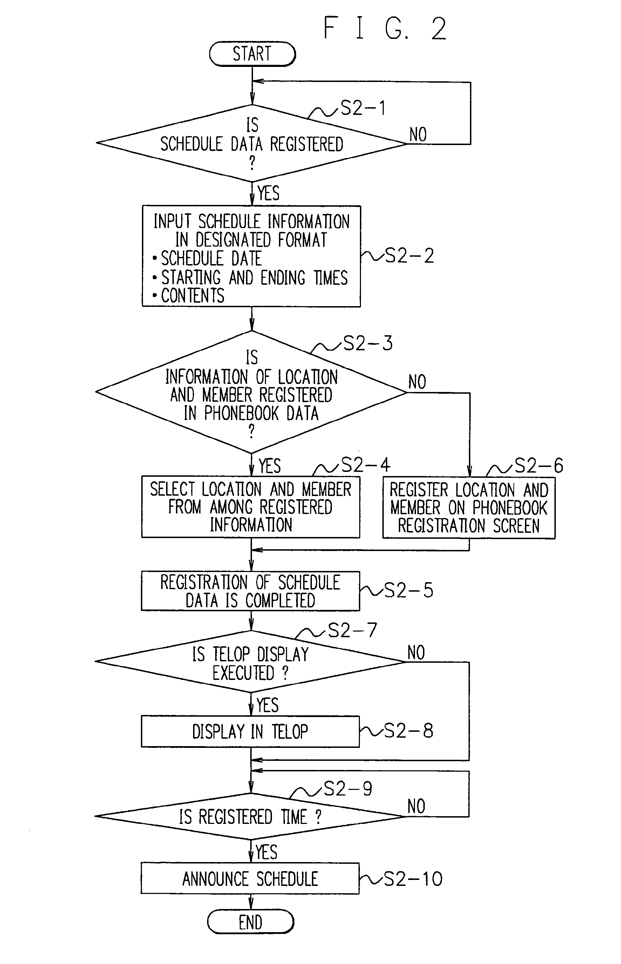

Next, the operation from registration of a schedule to a telop display of the schedule in the present invention will be described using FIG. 2.

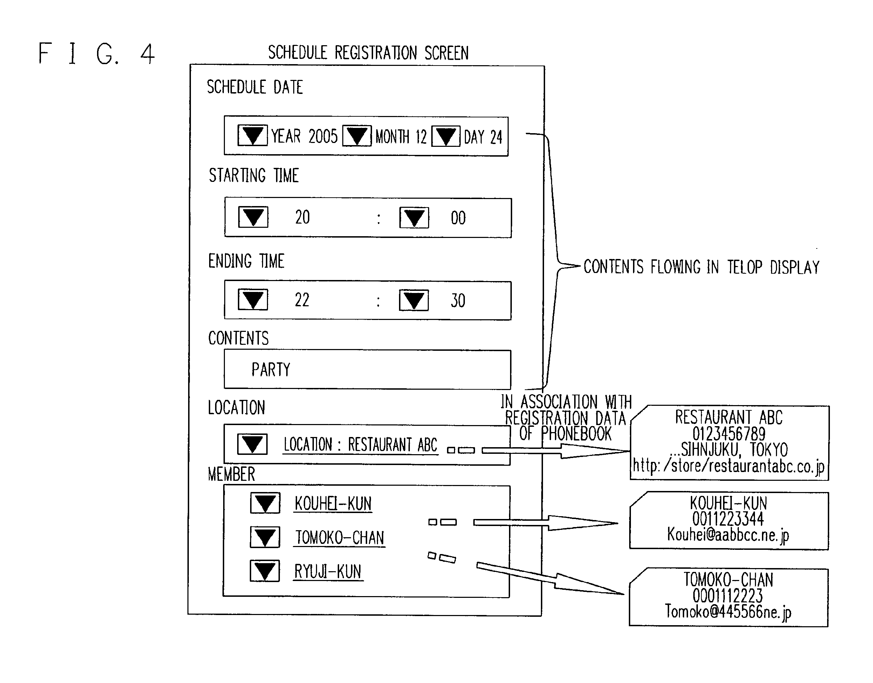

In the case where a user registers schedule data, when a schedule registration screen is displayed by the key operation unit 1-4 (S2-1), for example, a schedule registration screen with a pre-set format as shown in FIG. 4 is displayed on the display unit 1-5; and the user registers the schedule data in accordance with the format (S2-2).

There is a column, on which a location and a member are registered, in the schedule registration screen; and when the column is selected, the control unit 1-3 accesses the memory 1-6 and judges whether or not there is information previously registered in phonebook data (S2-3). When there is the information registered in the phonebook data, the information is displayed; and the user selects a desired location and member from among the displayed information (S2-4).

For example, as shown in FIG. 4, in the case where the column of the location is selected, if location information such as restaurants is registered in the phonebook data, a list of the registered location information is displayed; and when the user selects desired location information from among the registered location information, the selected location information (in this case, "restaurant ABC") is displayed in the location column. Similarly, in the case where a column of the member is selected, if person information is registered in the phonebook data, a list of the registered person information is displayed; and when the user selects desired person information from among the registered person information, selected person information (in this case, "Kouhei-kun", "Tomoko-chan", and "Ryuji-kun") is displayed in the column of the member.

Furthermore, in the case where there is not information to be selected in the existing phonebook data in the registration of the location and the member, the key operation unit 1-4 is operated (for example, a pre-set key is pressed) to notify to the control unit 1-3; and the control unit 1-3 receives the notification and displays a phonebook registration screen on the display unit 1-5. Then, the user registers the location and the member on the phonebook registration screen; and registers not only name but also contact information (phone number, mail address, and the like) in the case of registering the member (S2-6). After the registration, the control unit 1-3 displays the schedule registration screen on the display unit 1-5, and displays newly registered information in the column of the location and the member. In addition, in this case, it is configured such that the phonebook registration screen is displayed in the case where there is no information to be selected in the phonebook data; however, there may be a configuration on which the location and the member are directly inputted on the schedule registration screen.

Then, when the input to all the column of the schedule registration screens is completed (or a pre-provided registration button, a determination button, and the like are operated), the inputted schedule is registered (S2-5), and the control unit 1-3 stores the inputted information in the memory 1-6. Accordingly, the location and the member of the schedule data are registered in association with the phonebook data.

Next, when the user displays a telop display setting screen of the schedule data by the key operation unit 1-4, a selection screen for whether or not a telop display is executed is displayed on the display unit 1-5, then the user sets the presence or absence of the telop display by the key operation unit 1-4 (S2-7). In addition, in this case, a configuration is made to select whether or not the telop display is executed on the telop display setting screen after registering the schedule data; however, there may be provided a column which selects whether or not the telop display is executed on the schedule registration screen.

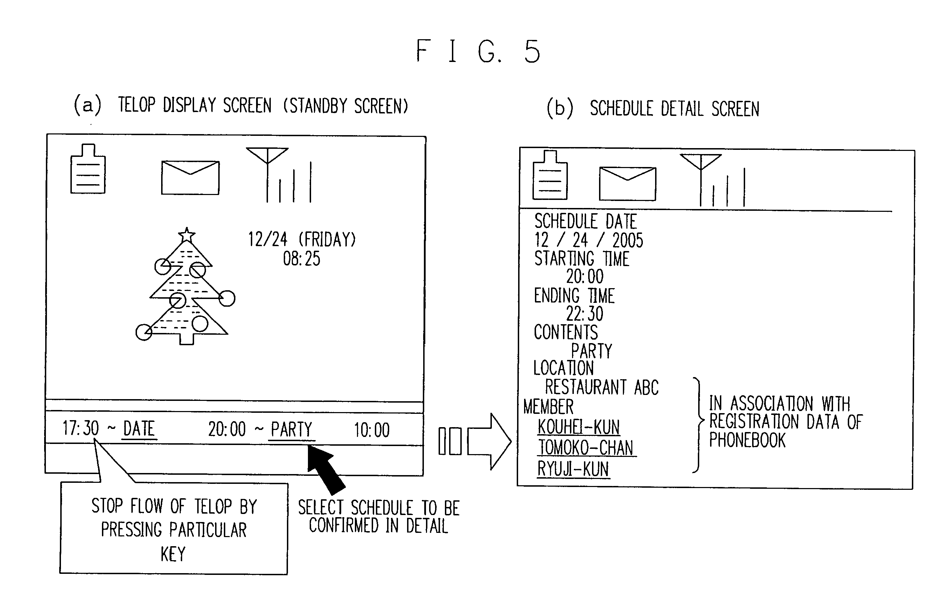

Then, in the case where the telop display is set, the control unit 1-3 fetches the schedule data of within a predetermined time (for example, within 24 hours) after key press detection from the memory 1-6, and displays at least a part of the schedule data selected by the display unit 1-5 in the telop (S2-8). For example, as shown in FIG. 5(a), at least the part of the schedule data (for example, starting time, contents, and the like) is displayed so as to flow toward a predetermined direction (usually, in the left direction of the screen) in a predetermined position on a standby screen (position which does not affect visibility in icon and wallpaper). In addition, the telop display is not limited to the configuration shown in FIG. 5(a); but the telop may be appropriately set, for example, the telop may be displayed at an upper part of the screen, may be displayed so as to flow in the vertical direction of the screen, or may be displayed by blinking the schedule data.

After that, the control unit 1-3 fetches a present time from the timepiece unit 1-10 and judges whether or not the present time becomes a time registered in the schedule data (S2-9); and when the present time becomes the registered time, the control unit 1-3 announces the arrival of the schedule to the user (S2-10) by displaying the detail of the schedule on the display unit 1-5, by sounding an alarm from the speaker 1-9, and the like.

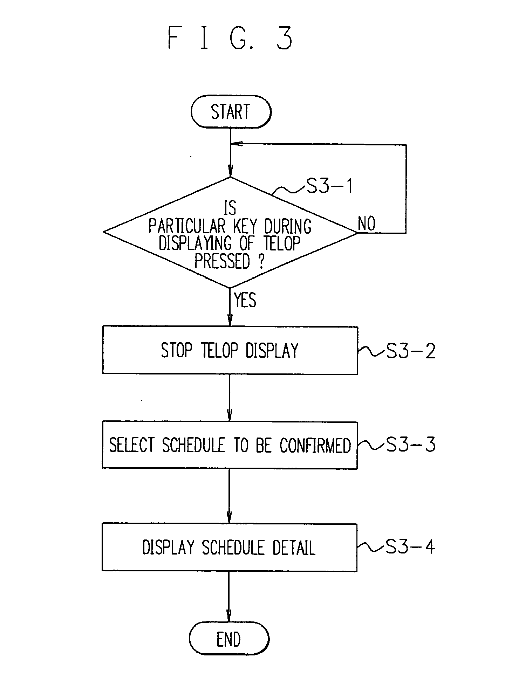

Next, the operation in the case where the user confirms the detail of the schedule from the telop display screen will be described using FIG. 3.

When the user presses a particular key of the key operation unit 1-4 during displaying of the telop of the schedule to be confirmed in detail (S3-1), the control unit 1-3 stops a state where the telop is flown (S3-2). In addition, the particular key can be optionally selected from among the key operation unit 1-4, and it is preferable to be a key which does not confuse with other operation of the mobile terminal device.

When a schedule portion to be confirmed of the displayed telop whose flow is stopped is selected by the key operation unit 1-4 by the user (S3-3), the control unit 1-3 fetches selected schedule data from the memory 1-6 and displays on the display unit 1-5 (S3-4). A display screen of the display unit 1-5 in the aforementioned operation becomes as shown in FIG. 5, for example. When the schedule portion (in this case, a portion showing the contents) to be confirmed on the telop display screen shown in FIG. 5(a) is selected, a schedule detail screen as shown in FIG. 5(b) is displayed, and the user can confirm the detail of the schedule by the screen.

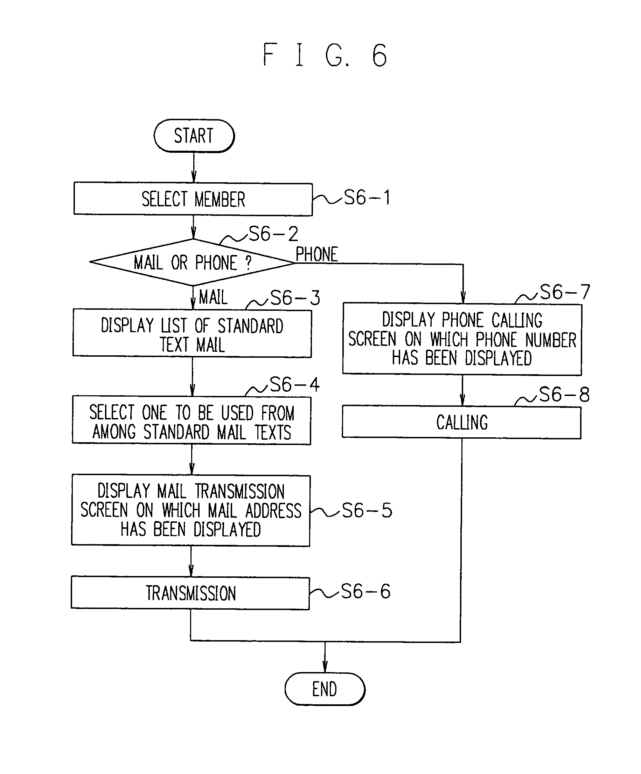

Next, the operation in the case where the user contacts (mail or phone) to the registered member from the detail screen of the schedule will be described using FIG. 6.

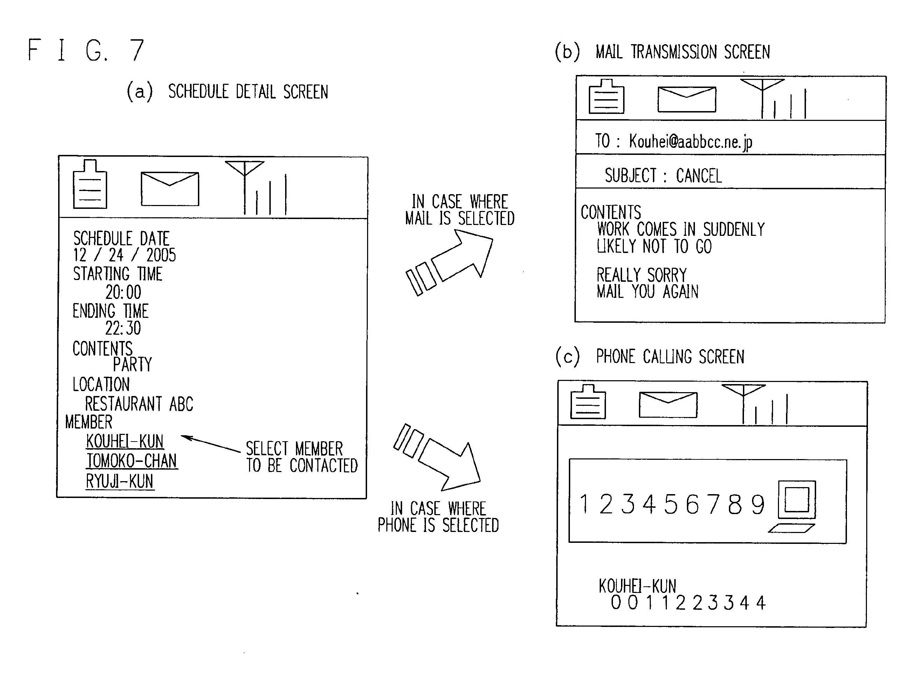

When the user selects the member portion to be contacted from the schedule detail screen (see FIG. 7(a)) displayed on the display unit 1-5 by the key operation unit 1-4 (S6-1), the control unit 1-3 displays a selection (mail or phone) screen of contact means on the display unit 1-5.

Then, when the user selects the mail as contact means by the key operation unit 1-4 (mail at S6-2), the control unit 1-3 fetches a standard text mail previously registered from the memory 1-6, and displays a list of a mail title on the display unit 1-5 (S6-3). When the user selects the standard text mail to be used by the key operation unit 1-4 (S6-4), the control unit 1-3 fetches a mail address of the phonebook data registered in association with the member from the memory 1-6, and displays a mail transmission screen as shown in FIG. 7(b) (S6-5). After the user corrects the title or the contents as needed, and when the user performs a mail transmission operation by the key operation unit 1-4, the control unit 1-3 transmits the selected standard text mail to the mail address corresponding to the member (S6-6). In addition, as the standard text mail, a mail for canceling, a mail for being tardy, and the like are previously registered in the memory 1-6.

On the other hand, when the user selects the phone calling as contact means by the key operation unit 1-4 (phone at 6-2), the control unit 1-3 fetches the phone number of the phonebook data registered in association with the member from the memory 1-6; and displays a phone calling screen, on which a phone number of calling destination has been inputted as shown in FIG. 7(c), on the display unit 1-5 (S6-7). When the user performs a calling operation by the key operation unit 1-4, the control unit 1-3 performs the phone calling to the phone number corresponding to the member (S6-8).

As described above, the control unit 1-3 executes the telop display of at least a part of information concerning the schedule within a predetermined period among the registered schedules on the standby screen or the like; when the particular key is operated during displaying of the telop, the telop display is stopped; and when the user selects a desired schedule from among the displayed schedules, control for displaying the schedule detail screen corresponding to the schedule on the display unit 1-5 is performed. Therefore, the user can easily confirm the schedule. Furthermore, when the user selects the member on the schedule detail screen, the control unit 1-3 fetches the mail address and the phone number corresponding to the member from the phonebook data, and performs control for displaying the mail transmission screen on which the mail address is previously displayed and the phone calling screen on which the phone number is previously displayed on the display unit 1-5; and therefore, a process concerning the schedule such as mail transmission and phone calling can be easily executed.

### Exemplary Embodiment 2

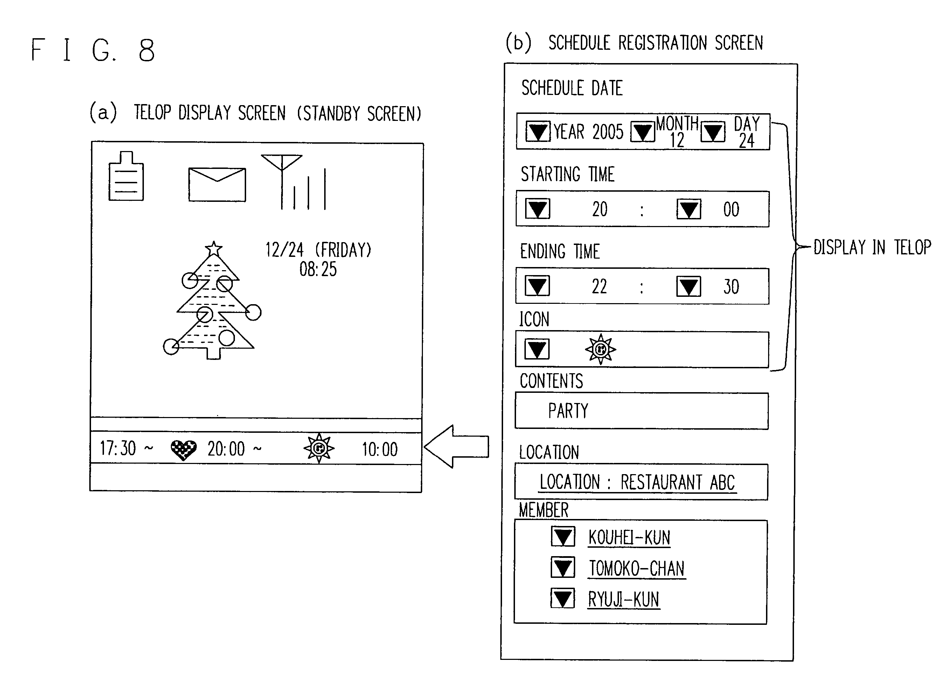

Next, a mobile terminal device and a schedule management method according to a second exemplary embodiment of the present invention will be described with reference to FIG. 8. FIG. 8 is a view showing transition from a schedule registration screen to a telop display screen.

In the aforementioned first exemplary embodiment, as the telop display contents of the schedule, there are included the starting time, ending time, contents, and the like (in the drawing, starting time and contents) in the schedule registration screen shown in FIG. 4; however, when the contents of the schedule are displayed on the standby screen, there is an apprehension that the schedule is watched by others, and the screen looks unattractive if a lot of information is displayed in the telop on the standby screen.

Consequently, in the exemplary embodiment, as shown in FIG. 8(b), when a schedule is registered on a schedule registration screen, an icon representation is added to registration contents; and therefore, it becomes possible to select a display mode (title display and/or icon display). Then, in the case where the icon display is selected, an icon is displayed (in this case, the icon is displaced in place of the contents) in place of specific information of schedule data (one or a plurality of items of information optionally selected from among the schedule data) as shown in FIG. 8(a).

This can be such that the schedule is shown to be understood by only user himself (herself) and the schedule is not to be known by others; and design property can be improved and the screen can looks nice.

### Exemplary Embodiment 3

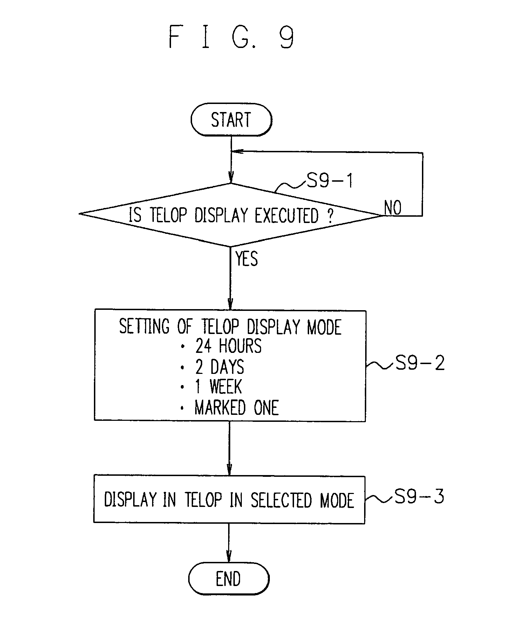

Next, a mobile terminal device and a schedule management method according to a third exemplary embodiment of the present invention will be described with reference to FIG. 9. FIG. 9 is a flow chart diagram showing a procedure for setting of a telop display mode.

In the aforementioned first exemplary embodiment, the schedule to be displayed in a telop is the schedule within 24 hours from setting timing of ON for the telop display; however, several modes of the telop display can be selected.

In this case, as shown in FIG. 9, in the case of executing the telop display after selecting whether or not the telop display is executed (S9-1), a control unit 1-3 displays a selection screen of a display mode on a display unit 1-5 (S9-2), and in accordance with the display mode selected there (for example, 24 hours, 2 DAY, 1 WEEK, only marked one), the control unit 1-3 fetches schedule data from a memory 1-6 and displays in a telop (S9-3).

This can perform schedule management complying with users, and convenience of the user can be improved.

### Exemplary Embodiment 4

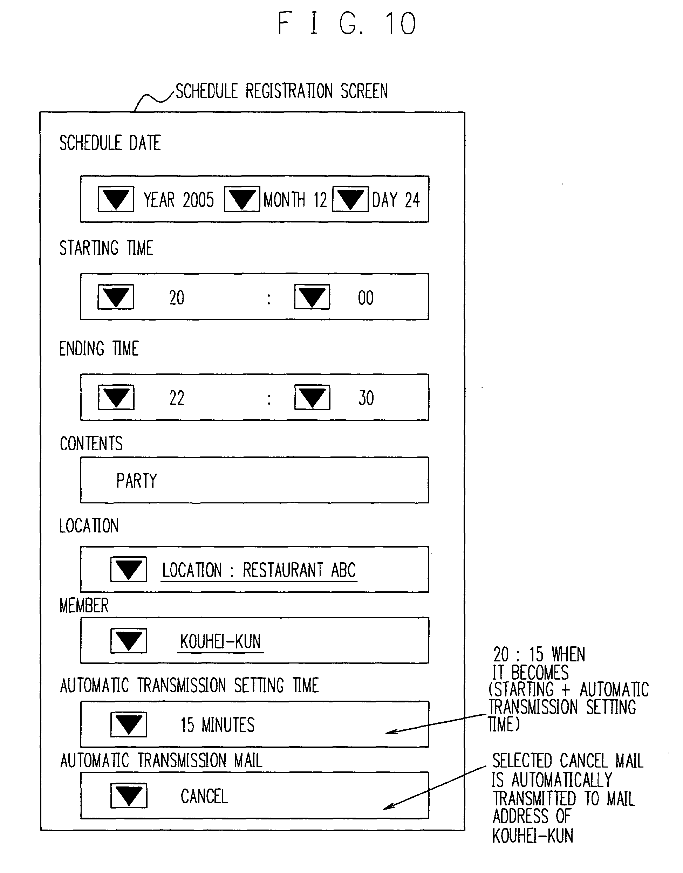

Next, a mobile terminal device and a schedule management method according to a fourth exemplary embodiment of the present invention will be described with reference to FIG. 10. FIG. 10 is a view showing a configuration example of a schedule registration screen.

In the aforementioned first exemplary embodiment, the mail transmission and the phone calling are performed by selecting the member on the schedule detail screen and by displaying the mail transmission screen on which the mail address has been displayed and the phone calling screen on which the phone number has been displayed. In this configuration, time for inputting the mail address and the phone number can be saved; however, the mail transmission and the phone calling need some operations, therefore, it becomes inconvenient in the case where the mobile terminal device cannot be operated during conference or the like.

Consequently, in the exemplary embodiment, in the case where a certain period of time is elapsed from a starting time registered in the schedule, it is possible to automatically transmit a tardy mail and a cancel mail to the other side.

More specifically, as shown in FIG. 10, an automatic transmission setting time, an automatic transmission mail column, and the like are provided on the schedule registration screen; a user sets a time (automatic transmission setting time) from a starting time to automatic transmission of the mail on the schedule registration screen, and sets a standard text mail which is to be automatically transmitted.

Then, in the case where the automatic transmission setting time set by the user is elapsed from the starting time registered in the schedule, a control unit 1-3 fetches a mail address corresponding to a member registered in schedule data from a memory 1-6, and automatically transmits the standard text mail set by the user (tardy mail, cancel mail, and the like). For example, in the case where the automatic transmission setting time is set to 15 minutes and the standard text mail is set to the cancel mail, the cancel mail is automatically transmitted at 20:15 if the starting time is 20:00.

As described above, the mail is previously set so as to be automatically transmitted on the schedule registration screen; and accordingly, even in the case where the user cannot operate the mobile terminal device, the pre-set mail is transmitted to a predetermined member; and therefore, it is possible to surely correspond to changes in the schedule.

In addition, in the aforementioned exemplary embodiments, the case in which the present invention is applied to the mobile terminal device such as a mobile phone; however, the present invention is not limited to the aforementioned exemplary embodiments, but, the present invention can be similarly applied to any equipment provided with a schedule function such as personal digital assistants (PDA) and personal computers.

### INDUSTRIAL APPLICABILITY

The present invention can be used for any equipment provided with a schedule function.

### BRIEF DESCRIPTION OF THE DRAWINGS

FIG. 1 is a block diagram typically showing a configuration of a mobile terminal device according to a first exemplary embodiment of the present invention;
FIG. 2 is a flow chart diagram showing a procedure of registration of a schedule and a telop display using the mobile terminal device according to the first exemplary embodiment of the present invention;
FIG. 3 is a flow chart diagram showing a procedure for a detailed display of a schedule using the mobile terminal device according to the first exemplary embodiment of the present invention;
FIG. 4 is a view showing a configuration example of a schedule registration screen of the mobile terminal device according to the first exemplary embodiment of the present invention;
FIG. 5 is a view showing transition from a telop display screen to a schedule detail screen of the mobile terminal device according to the first exemplary embodiment of the present invention;
FIG. 6 is a flow chart diagram showing a procedure of mail transmission and phone calling using the mobile terminal device according to the first exemplary embodiment of the present invention;
FIG. 7 is a view showing transition from the schedule detail screen to a mail transmission screen or a phone calling screen of the mobile terminal device according to the first exemplary embodiment of the present invention;
FIG. 8 is a view showing transition from a schedule registration screen to a telop display screen of a mobile terminal device according to a second exemplary embodiment of the present invention;
FIG. 9 is a flow chart diagram showing a procedure for setting a telop display mode using a mobile terminal device according to a third exemplary embodiment of the present invention; and
FIG. 10 is a view showing a configuration example of a schedule registration screen of a mobile terminal device according to a fourth exemplary embodiment of the present invention.

### DESCRIPTION OF REFERENCE NUMBERS

- 1-1: Antenna
- 1-2: Radio transmission unit
- 1-3: Control unit
- 1-4: Key operation unit
- 1-5: Display unit
- 1-6: Memory
- 1-7: Audio codec unit
- 1-8: Microphone
- 1-9: Speaker
- 1-10: Timepiece unit

## Claims

1. A mobile terminal device provided with a schedule function which registers a user's schedule in a storing unit comprising at least:
a control unit which displays at least a part of information in a telop on a display unit, the information being concerned with one or a plurality of schedules to be executed within a predetermined period among schedules previously registered in the storing unit.

2. The mobile terminal device according to claim 1,
wherein the control unit displays specific information to be selected from among the information concerning the schedule on the display unit as an icon corresponded to the specific information.

3. The mobile terminal device according to claim 1 or 2,
wherein in the case where a particular key is operated during displaying of the telop, the control unit stops the operation of the telop display; and in the case where a predetermined schedule is selected from among schedules displayed in the telop whose operation is stopped, the control unit displays a schedule detail screen, on which all information concerning the predetermined schedule is described, on the display unit.

4. The mobile terminal device according to claim 3,
wherein the storing unit previously stores members to be registered in the schedule in association with phonebook data, and
in the case where a predetermined member is selected on the schedule detail screen, the control unit fetches a mail address corresponding to the predetermined member from the phonebook data, and displays a mail transmission screen, on which the mail address is previously displayed, on the display unit.

5. The mobile terminal device according to claim 3,
wherein the storing unit previously stores members to be registered in the schedule in association with phonebook data, and
in the case where a predetermined member is selected on the schedule detail screen, the control unit fetches a phone number corresponding to the predetermined member from the phonebook data, and displays a phone calling screen, on which the phone number is previously displayed, on the display unit.

6. The mobile terminal device according to claim 1 or 2,
wherein the storing unit previously stores with members to be registered in the schedule in association with phonebook data, and
when a pre-set time is elapsed from a time registered in a predetermined schedule, the control unit fetches a mail address corresponding to a member registered in the predetermined schedule from the phonebook data, and transmits a standard text mail previously set in the mail address.

7. A schedule management method in a mobile terminal device provided with a schedule function which registers a user's schedule in a storing unit comprising at least:
a first step of selecting one or a plurality of schedules to be executed within a predetermined period among schedules previously registered in the storing unit;
a second step of displaying at least a part of information concerning one or the plurality of the schedules in a telop on a display unit.

8. The schedule management method according to claim 7,
wherein in the second step, the display unit is displayed with specific information to be selected from among the information concerning the schedule as an icon corresponded to the specific information.

9. The schedule management method according to claim 7 or 8, further comprising:
a third step of stopping the operation of a telop display in the case where a particular key is operated during displaying of the telop; and
a fourth step of displaying a schedule detail screen, on which all information concerning a predetermined schedule is described, on the display unit in the case where the predetermined schedule is selected from among the schedules displayed in a telop whose operation is stopped.

10. The schedule management method according to claim 9,
wherein the storing unit previously stores members to be registered in the schedule in association with phonebook data, and
in the case where a predetermined member is selected on the schedule detail screen displayed at the fourth step, a mail address corresponding to the predetermined member is fetched from the phonebook data, and a mail transmission screen, on which the mail address is previously displayed, is displayed on the display unit.

11. The schedule management method according to claim 9,
wherein the storing unit previously stores members to be registered in the schedule in association with phonebook data, and
in the case where a predetermined member is selected on the schedule detail screen displayed at the fourth step, a phone number corresponding to the predetermined member is fetched from the phonebook data, and a phone calling screen, on which the phone number is previously displayed, is displayed on the display unit.

12. The schedule management method according to claim 7 or 8,
wherein the storing unit previously stores members to be registered in the schedule in association with phonebook data, and
when a pre-set time is elapsed from a time registered in a predetermined schedule, a mail address corresponding to a member registered in the predetermined schedule is fetched from the phonebook data, and a standard text mail previously set in the mail address is transmitted.
